# EUROPÄISCHE PATENTSCHRIFT

(11) **EP 0 601 578 B1**
(45) Veröffentlichungstag und Bekanntmachung des Hinweises auf die Patenterteilung: **05.04.1995**
(21) Anmeldenummer: 93119861.8
(22) Anmeldetag: 09.12.1993
(51) Int. Cl.: C07F 7/20, C07F 7/16, C07F 7/12

(54) **Verfahren zur Entfernung von Wasserstoffhaltigen Silanen aus Silanen**
Process for the removal of hydrogen-containing silanes from silanes
Procédé pour l'élimination des hydrosilanes dans les silanes

(30) Priorität: 10.12.1992 DE 4241696
(43) Veröffentlichungstag der Anmeldung: 15.06.1994
(73) Patentinhaber: Wacker-Chemie GmbH, 81737 München (DE)
(72) Erfinder: Dr. Kalchauer, Wilfried, D-84489 Burghausen (DE); Dr. Pachaly, Bernd, D-84489 Burghausen (DE)

(56) Entgegenhaltungen:
- EP-A- 0 423 948
- BE-A- 660 409
- FR-A- 1 442 035
- INORGANIC CHEMISTRY Bd. 6, Nr. 4 , April 1967 Seiten 844 - 845 HOLLANDSWORTH, R.P. ET AL. 'HALOGENATION OF SILANES BY SILVER CHLORIDE AND SILVER BROMIDE' *
- CHEMICAL ABSTRACTS, vol. 71, no. 11, 15. September 1969, Columbus, Ohio, US; abstract no. 50204f, GOLUBTSOV, S.A. ET AL. 'REMOVAL OF ETHYLDICHLOROSILANE FROM DIMETHYLCHLOROSILANE' Seite 425 ; & IZOBRET., PROM. OBRAZTSY, TOVARNYE ZNAKI Bd. 46, Nr. 11 , 1969 Seiten 36 - 37 *

## Beschreibung

Die Erfindung betrifft ein Verfahren zur Entfernung von Silanen mit direkt an Silicium gebundenen Wasserstoffatomen aus Kohlenwasserstoffsilanen,
Kohlenwasserstoffhalogensilanen und Halogensilanen.

Bei der Direktsynthese von Methylchlorsilanen aus Silicium und Methylchlorid bei 250 bis 300°C mit Kupferkatalysatoren entstehen neben den Silanen der allgemeinen Formel MeₐSiCl₄₋ₐ, wobei a die Werte 0 bis 4 hat und Me hier sowie im folgenden eine Methylgruppe bedeutet, in kleinen Mengen auch Ethylchlorsilane, verschiedene Hydrogensilane, vor allem Me_{b}HSiCl_{3-b}, wobei b die Werte 0 bis 2 hat, und Ethyldichlorsilan EtHSiCl₂. Die Direktsynthese ist u. a. in W. Noll, Chemistry and Technology of Silicones, Academic Press, Inc., Orlando, Florida, 1968, Kap. 2.2, beschrieben.

Das begehrteste Zielprodukt der Direktsynthese ist Me₂SiCl₂, das durch Hydrolyse und Polykondensation zu Siliconpolymeren mit vielfältigen funktionellen Gruppen und Strukturen umgesetzt werden kann.

Ein wesentliches Qualitätsmerkmal der meisten Siliconpolymeren ist ein möglichst geringer Anteil an trifunktionellen Verunreinigungen im Polymergerüst. Eine der möglichen trifunktionellen Verunreinigungen des eingesetzten Me₂SiCl₂ ist EtHSiCl₂.

Da sich die Siedepunkte von Me₂SiCl₂ (70-71°C) und EtHSiCl₂ (74-76°C) nur um etwa 4°C voneinander unterscheiden, ist ein sehr hoher destillativer Aufwand, wie hohe Rücklaufverhältnisse, große Anzahl der theoretischen und praktischen Böden, hoher Energiebedarf und reduzierte Raum/Zeit-Ausbeute, erforderlich, um das Me₂SiCl₂ in der für die jeweilige Anwendung erforderlichen Reinheit zu erhalten.

In EP-A 423 948 ist die Entfernung von Silanen mit direkt an Silicium gebundenen Wasserstoffatomen (H-Silanen) aus Organosilangemischen durch Umsetzung mit Chlorwasserstoffgas in Gegenwart von geeigneten Katalysatoren aus der VIIIten Nebengruppe des Periodensystems, nämlich Pd, Pt, Rh, Ru, Ni, Os, Ir und deren Verbindungen in die entsprechenden Alkylchlorsilane beschrieben. Durch diese Maßnahme wird die Differenz in den Siedepunkten zwischen erwünschten Organosilanen und Verunreinigung derart erhöht, daß die Destillation mit erheblich verringertem Aufwand betrieben werden kann.

Der Nachteil dieses bekannten Verfahrens ist, daß die als Katalysatoren eingesetzten Metalle, mit Ausnahme von Nickel, relativ teuer sind, daß beim Einsatz von Nickel als Katalysator relativ hohe Katalysatorkonzentrationen erforderlich sind und die dabei erzielten Umsätze gering sind und daß die Metalle teilweise gegenüber Katalysatorgiften zu anfällig sind.

Die Erfindung betrifft ein Verfahren zur Entfernung von Silanen mit direkt an Silicium gebundenen Wasserstoffatomen aus Silanen der allgemeinen Formel I

RₓCl₃₋ₓSi-[SiR_{y}Cl_{2-y}]ₙ-A (I)

und deren Gemischen, wobei **R** einen gegebenenfalls halogensubstituierten Kohlenwasserstoffrest mit 1 bis 18 Kohlenstoffatomen bedeutet, der frei von ethylenischen Doppelbindungen ist, **A** ein Chloratom oder einen Rest **R** bedeutet, **x** die Werte 0, 1, 2 oder 3 hat, **y** die Werte 0, 1 oder 2 hat und **n** die Werte 0 oder 1 hat, bei dem die Silane mit direkt an Silicium gebundenen Wasserstoffatomen mit Chlorwasserstoff in Gegenwart von Silber oder Gold als Katalysatoren zu den entsprechenden Chlorsilanen umgesetzt werden.

Durch das erfindungsgemäße Verfahren können die H-Silane nahezu vollständig zu höhersiedenden Chlorsilanen, bei denen ein Chloratom an der Stelle gebunden ist, an der zuvor das Wasserstoffatom gebunden war, umgesetzt werden. Beispielsweise entsteht aus Trichlorsilan das Tetrachlorsilan, aus Ethyldichlorsilan das Ethyltrichlorsilan und aus Dimethylchlorsilan das Dimethyldichlorsilan. Diese Chlorsilane können, falls sie in dem Produktgemisch unerwünscht sind, leicht destillativ abgetrennt werden.

Die Umsetzung verläuft ausreichend schnell und mit Katalysatoren in fester Form; die Umsetzung wird also heterogen katalysiert, so daß der Katalysator in einer Destillationskolonne oder in einem Durchflußreaktor eingesetzt werden kann.

Silber ist erheblich billiger als die bisher verwendeten Metalle Pd, Pt, Rh, Ru, Os und Ir und die Umsetzung verläuft mit Silber deutlich schneller als mit Ni.

Gold weist gegenüber den bisher verwendeten Metallen Pd, Pt, Rh, Ru, Os, Ni und Ir aufgrund seines höchsten Normalpotentials in der elektrochemischen Spannungsreihe der Elemente eine größere Beständigkeit gegenüber Vergiftungserscheinungen und unerwünschten Reaktionen mit Alkylchlorsilanen oder Chlorwasserstoff und somit eine längere Lebensdauer auf.

Bei dem erfindungsgemäßen Verfahren können auch Legierungen aus Silber und Gold eingesetzt werden.

Der Katalysator wird vorzugsweise in feinverteilter Form, wobei er sich bevorzugt auf Trägern befindet, eingesetzt. Es können auch Träger eingesetzt werden, auf denen sich sowohl Silber als auch Gold befindet.

Beispiele für Träger sind Aktivkohle, Kohle und anorganische Oxide, wie Siliciumdioxid, Aluminium(III)oxid, Silikate, Titandioxid, Zirkondioxid; Carbide, wie Siliciumcarbid; wobei Kohle, Aktivkohle und Siliciumdioxid bevorzugte Beispiele sind.

Derartige Katalysatoren, bei denen sich die feinverteilten Metalle auf Trägern befinden, können durch Reduktion von Metallverbindungen in Gegenwart des Trägers hergestellt werden.

Die Konzentration der Metalle auf den Trägern beträgt vorzugsweise 0,8 bis 5 Gew.-%, bezogen auf das Gesamtgewicht des Katalysators; es können aber auch höhere oder niedrigere Konzentrationen verwendet werden.

Beispiele für Kohlenwasserstoffreste **R** der allgemeinen Formel I sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie Cyclopentyl-, Cyclohexyl-, Cycloheptylreste und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest.

Beispiele für halogensubstituierte Reste **R** sind Halogenalkylreste, wie der 3,3,3-Trifluor-n-propylrest, der 2,2,2,2',2',2'-Hexafluorisopropylrest, der Heptafluorisopropylrest, und Halogenarylreste, wie der o-, m- und p-Chlorphenylrest.

Als Reste **R** sind unsubstituierte Kohlenwasserstoffreste bevorzugt, insbesondere solche mit 1 bis 8 Kohlenstoffatomen, speziell Methyl-, Ethyl-, Tolyl- und Phenylreste.

Vorzugsweise hat **n** den Wert 0.

In dem erfindungsgemäßen Verfahren können beliebige H-Silane entfernt werden. Die H-Silane weisen beispielsweise die allgemeine Formel II

R'_{z}SiH_{4-z} (II)

auf, wobei **R'** einen gegebenenfalls halogensubstituierten Kohlenwasserstoffrest mit 1 bis 18 Kohlenstoffatomen bedeutet und **z** die Werte 0 bis 3 hat.

Beispiele für die Reste **R'** sind die vorstehend beschriebenen Beispiele für **R**, und Alkenylreste, wie der Vinyl- und der Allylrest.

Bevorzugte Beispiele für zu entfernende H-Silane sind Silan, Chlorsilan, Dichlorsilan, Trichlorsilan, Methylsilan, Methylchlorsilan, Methyldichlorsilan, Dimethylchlorsilan und Ethyldichlorsilan.

Das erfindungsgemäße Verfahren eignet sich besonders gut für den Einsatz bei der Reinigung von Rohprodukten und vorgereinigten Produkten aus der Direktsynthese von Methylchlorsilanen, insbesondere von Dimethyldichlorsilan, die bedingt durch die Direktsynthese EtHSiCl₂ und gegebenenfalls weitere Nebenprodukte enthalten. Die Nebenprodukte der Direktsynthese sind beispielsweise in W. Noll, Chemistry and Technology of Silicones, Academic Press, Inc., Orlando, Florida, 1968, Kap. 2.2, und A. Hunyar, Chemie der Silikone, Verlag Technik, Berlin 1952, Seiten 92 bis 94, beschrieben.

Die Konzentration an H-Silanen liegt üblicherweise bei 100 bis 5000 ppm; es können aber auch höhere oder niedrigere Konzentrationen an H-Silanen in den zu reinigenden Produkten aus der Methylchlorsilansynthese enthalten sein.

Das erfindungsgemäße Verfahren wird vorzugsweise bei einer Temperatur von 50 bis 150°C und beim Druck der umgebenden Atmosphäre durchgeführt. Es können aber auch höhere oder niedrigere Temperaturen und Drücke angewendet werden.

Der erfindungsgemäß verwendete Katalysator kann in der Flüssigphase oder in der Gasphase zum Einsatz kommen.

Aus Gründen der Stöchiometrie muß zur vollständigen Entfernung der H-Silane pro Wasserstoffatom mindestens ein Chlorwasserstoffmolekül eingesetzt werden. Vorzugsweise wird Chlorwasserstoffgas im stöchiometrischen Überschuß eingesetzt, da dadurch die Verweilzeiten verringert und die Umsetzungsgrade erhöht werden können.

Das erfindungsgemäße Verfahren kann absatzweise, halbkontinuierlich oder vollkontinuierlich durchgeführt werden, wobei bevorzugt die vollkontinuierliche Fahrweise zum Einsatz kommt.

Bei kontinuierlicher Fahrweise beträgt die Verweilzeit der H-Silane in Abhängigkeit von deren Ausgangskonzentration in einer bevorzugten Ausführungsform 0,5 bis 30 Sekunden; es können jedoch auch längere oder kürzere Verweilzeiten gewählt werden.

### Beispiele

In den nachfolgenden Beispielen sind, falls jeweils nicht anders angegeben,
a) alle Mengenangaben auf das Gewicht bezogen;
b) alle Drücke 0,10 MPa (abs.);
c) alle Temperaturen 20°C.

Des weiteren werden die folgenden Abkürzungen verwendet:
- Me:: Methylrest
- Et:: Ethylrest

### Katalysatorherstellung

35 g mit Salpetersäure gereinigte und getrocknete stückelige Aktivkohle - Conterbon BA der Firma Lurgi, Frankfurt - wurden mit 5 g Silbernitrat, 140 ml destilliertem Wasser und 1 ml Essigsäure vermischt und auf 70°C erwärmt. Anschließend wurde unter Rühren 3 ml Formaldehydlösung (37 %ig) zugegeben. Die beschichtete Kohle wurde von der flüssigen Phase getrennt, mit destilliertem Wasser gewaschen und 10 Stunden lang im Ölpumpenvakuum bei 120°C getrocknet. Der Silbergehalt auf der Kohle betrug ca. 1,8 Gew.-%.

30 g mit Salpetersäure gereinigte und getrocknete stückelige Aktivkohle - Conterbon BA der Firma Lurgi, Frankfurt - wurden mit 2,5 g Tetrachlorogoldsäure, 300 ml destilliertem Wasser und 8 ml konzentrierter Salzsäure vermischt und auf 80°C erwärmt. Anschließend wurde unter Rühren 8 ml Formaldehydlösung (37 %ig) zugegeben. Die beschichtete Kohle wurde von der flüssigen Phase getrennt, mit destilliertem Wasser gewaschen und 10 Stunden lang im Ölpumpenvakuum bei 120°C getrocknet. Der Goldgehalt auf der Kohle betrug ca. 0,23 %.

### Beispiele 1 und 2 (erfindungsgemäß) und Beispiel 3 (nicht erfindungsgemäß)

In einem Dreihalskolben mit aufgesetztem Tropftrichter, Gaseinleitungsrohr und einer Spiegelglaskolonne mit aufgesetztem Destillationskopf wurden unter Argonatmosphäre 110 g eines Gemisches aus Me₂SiCl₂ und 520 ppm EtHSiCl₂ vorgelegt. A g Katalysator wurden in die Spiegelglaskolonne eingebracht.

Das Silan im Kolben wurde unter Rühren auf 70°C erwärmt und Chlorwasserstoff wurde in einer Menge von 4 l/Stunde in die Mischung eingeleitet. Die verdampften Silane und das Chlorwasserstoffgas wurden durch die Kolonne geleitet, im Destillationskopf kondensiert und abgenommen. In dem Ausmaß wie Destillat aus dem System entfernt wurde, wurde in den Kolben Me₂SiCl₂/EtHSiCl₂ (520 ppm) zudosiert.

Nach B Minuten Laufzeit wurde die Reaktion abgebrochen und das Destillat mittels GC analysiert.

Die Destillatmenge betrug nach der angegebenen Reaktionszeit C ml (Massefluß D ml/h); dies entspricht einer Verweilzeit von ca. E Sekunden bezogen auf Me₂SiCl₂ - gasförmig über dem Katalysator. Die Konzentration an EtHSiCl₂ im Destillat betrug F ppm.

**Tabelle I**

| **Beispiel** | **Katalysator** | **A(g)** | **B (min)** | **C(ml)** | **D (ml/h)** | **E(s)** | **F(ppm)** |
|---|---|---|---|---|---|---|---|
| **1** | Gold/Aktivkohle (0,23%)*) | 17 | 125 | 250 | 120 | 2,6 | 35 |
| **2** | Silber/aktivkohle (1,8%)*) | 22 | 155 | 350 | 135 | 3,5 | 25 |
| **3** | Aktivkohle *) | 17 | 193 | 610 | 190 | 1,7 | 120 |

| | | | | | | | |
|---|---|---|---|---|---|---|---|
| *) siehe Katalysatorherstellung | | | | | | | |

### Beispiel 4 (erfindungsgemäß)

Versuchsaufbau und Durchführung wie in Beispiel 1 beschrieben, mit der Änderung, daß das eingesetzte Silan folgende Zusammensetzung in Gew.-% aufwies:
60 % Tetramethyldichlordisilan
34 % Methyldichlorsilan
6 % Rest (verschiedene Methylchlor-Mono- und -Disilane)
Als Katalysator wurden 20 g Silber auf Aktivkohle (1,8 %) eingesetzt; die Kolbentemperatur wurde auf 150°C erhöht, der Massefluß auf 50 ml/h reduziert und die Verweilzeit auf 12 Sekunden erhöht. Das erhaltene Destillat wies folgende Zusammensetzung auf:
30 % Tetramethyldichlordisilan
57 % Methyltrichlorsilan
4 % Methyldichlorsilan (Umsetzungsgrad bezogen auf HCl: 94 %)
Im Reaktionskolben reicherte sich Tetramethyldichlordisilan an; Methyldichlorsilan war nur noch in Spuren vorhanden.

## Patentansprüche

1. Verfahren zur Entfernung von Silanen mit direkt an Silicium gebundenen Wasserstoffatomen aus Silanen der allgemeinen Formel I
RₓCl₃₋ₓSi-[SiR_{y}Cl_{2-y}]ₙ-A (I)
und deren Gemischen, wobei **R** einen gegebenenfalls halogensubstituierten Kohlenwasserstoffrest mit 1 bis 18 Kohlenstoffatomen bedeutet, der frei von ethylenischen Doppelbindungen ist, **A** ein Chloratom oder einen Rest **R** bedeutet, **x** die Werte 0, 1, 2 oder 3 hat, **y** die Werte 0, 1 oder 2 hat und **n** die Werte 0 oder 1 hat, bei dem die Silane mit direkt an Silicium gebundenen Wasserstoffatomen mit Chlorwasserstoff in Gegenwart von Silber oder Gold als Katalysatoren zu den entsprechenden Chlorsilanen umgesetzt werden.

2. Verfahren nach Anspruch 1, wobei der Katalysator in feinverteilter Form auf Trägern eingesetzt wird.

3. Verfahren nach Anspruch 1 oder 2, wobei die Silane mit direkt an Silicium gebundenen Wasserstoffatomen aus bei der Methylchlorsilansynthese anfallenden Produktgemischen entfernt werden.

4. Verfahren nach Anspruch 1, 2 oder 3, wobei EtSiHCl₂ entfernt wird.

## Claims

1. A process for the removal of silanes containing hydrogen atoms bonded directly to silicon from silanes of the general formula I
RₓCl₃₋ₓSi-[SiR_{y}Cl_{2-y}]ₙ-A (I)
and mixtures thereof, in which R denotes an optionally halogen-substituted hydrocarbon radical having 1 to 18 carbon atoms which is free from ethylenic double bonds, A denotes a chlorine atom or a radical R, x has the value 0, 1, 2 or 3, y has the value 0, 1 or 2 and n has the value 0 or 1, in which the silanes containing hydrogen atoms bonded directly to silicon are reacted with hydrogen chloride in the presence of silver or gold as catalysts to give the corresponding chlorosilanes.

2. The process as claimed in claim 1, wherein the catalyst is employed in finely divided form on supports.

3. The process as claimed in claim 1 or 2, wherein the silanes containing hydrogen atoms bonded directly to silicon are removed from product mixtures obtained during methylchlorosilane synthesis.

4. The process as claimed in claim 1, 2 or 3, wherein EtSiHCl₂ is removed.

## Revendications

1. Procédé pour éliminer les silanes ayant des atomes d'hydrogène liés directement au silicium, à partir des silanes de formule générale I
RₓCl₃₋ₓSi-[SiR_{y}Cl_{2-y}]ₙ-A (I)
et de leurs mélanges, où R représente un radical hydrocarboné, éventuellement halogéno-substitué, ayant de 1 à 18 atomes de carbone, qui est dépourvu de doubles liaisons éthyléniques, A représente un atome de chlore ou un radical R, X a la valeur 0, 1, 2 ou 3, y a la valeur 0, 1 ou 2, et n a la valeur 0 ou 1, dans lequel les silanes ayant des atomes d'hydrogène liés directement au silicium sont transformés en les chlorosilanes correspondants avec du gaz chlorhydrique, en présence d'argent ou d'or comme catalyseur.

2. Procédé selon la revendication 1, où le catalyseur est utilisé sous forme finement divisée sur des supports.

3. Procédé selon la revendication 1 ou 2, où les silanes ayant des atomes d'hydrogène liés directement au silicium sont éliminés à partir des mélanges de produits formés lors de la synthèse de méthylchlorosilanes.

4. Procédé selon la revendication 1, 2 ou 3, où l'on élimine EtSiHCl₂.
